# EUROPÄISCHE PATENTSCHRIFT

(11) **EP 2 979 766 B1**
(45) Veröffentlichungstag und Bekanntmachung des Hinweises auf die Patenterteilung: **17.01.2018**
(21) Anmeldenummer: 14179138.4
(22) Anmeldetag: 30.07.2014
(51) Int. Cl.: B05B 15/04, B05B 1/28, B05B 15/02, B05B 15/08, C23C 4/12, B05B 13/06, B05B 7/22, C23C 4/134

(54) **Vorrichtung und Verfahren zur metallischen Beschichtung sowie Aufnahmeeinheit für die Vorrichtung**
Device and method for metallic coating and holder unit for the device
Dispositif et procédé de revêtement métallique et unité de réception pour le dispositif

(43) Veröffentlichungstag der Anmeldung: 03.02.2016
(73) Patentinhaber: Sturm Maschinen- & Anlagenbau GmbH, 94330 Salching (DE)
(72) Erfinder: Ebenbeck, Andreas, 94315 Straubing (DE); Aufschläger, Gerhard, 94447 Platting (DE); Kesting, Marc, 94315 Straubing (DE); Völlinger, Ralf, 94315 Straubing (DE)
(74) Vertreter: Wunderlich, Rainer

(56) Entgegenhaltungen:
- EP-A2- 1 980 328
- WO-A2-2004/005575
- DE-A1- 10 130 455
- US-A- 5 176 412
- US-A1- 2013 000 550

## Beschreibung

Die Erfindung betrifft eine Vorrichtung zur metallischen Beschichtung eines Werkstückes mit einer verfahrbaren Beschichtungslanze, durch welche ein Metall-Plasmastrahl zum Bilden der Beschichtung aus Metallpartikeln erzeugbar ist, gemäß dem Oberbegriff des Anspruchs 1.

Die Erfindung betrifft weiterhin eine Aufnahmeeinheit für diese Vorrichtung zur metallischen Beschichtung eines Werkstückes gemäß dem Oberbegriff des Anspruchs 9.

Weiterhin betrifft die Erfindung ein Verfahren zur metallischen Beschichtung eines Werkstückes, wobei mittels einer Beschichtungslanze ein Metall-Plasmastrahl erzeugt wird, durch welchen auf dem Werkstück die Beschichtung aus Metallpartikeln gebildet wird, gemäß dem Oberbegriff des Anspruchs 12.

Insbesondere im Motorenbau ist es erforderlich, die Laufflächen von Zylinderbohrungen mit einer speziellen metallischen Beschichtung zu versehen, damit hinreichende Reibungs- und Schmierbedingungen zwischen einer Zylinderlauffläche und einem Zylinderkolben gewährleistet sind. Dies gilt vor allem dann, wenn sowohl das Motorengehäuse als auch der Zylinderkolben aus demselben Material, etwa aus Aluminium, gefertigt sind.

Es ist bekannt, unmittelbar auf eine Bohrungswand eine Metallbeschichtung durch eine Beschichtungslanze aufzubringen, mit welcher ein Metall-Plasmastrahl erzeugt wird. Auf diese Weise können sehr dünnwandige und sehr stabile Metallbeschichtungen an Bohrungswänden gebildet werden.

Dabei wird die Beschichtungslanze in eine Zylinderbohrung eines Motorblockes gefahren, wobei der erzeugte Metall-Plasmastrahl auf die Bohrungswandung gerichtet wird. Aufgrund einer gewissen Streuung des Metall-Plasmastrahles gelangen nicht alle Metallpartikel auf die Bohrungswand. Diese nicht aufgebrachten Metallpartikel werden als Overspray bezeichnet. Dies kann zu unerwünschten Fehlbeschichtungen in dem Motorblock oder an der Beschichtungseinrichtung führen.

In der DE 101 30 455 A1 und der EP 1 980 328 A2 sind Vorrichtungen zur metallischen Beschichtung von zylindrischen Werkstücken beschrieben. Beide Vorrichtungen weisen eine Beschichtungslanze und eine Einrichtung zum Absaugen von Overspray auf, welche an entgegengesetzten Werkstückseiten angeordnet sind.

Die US 2013/000550 A1 betrifft eine Vorrichtung zum Metallbeschichten von Werkstücken mittels einer Plasmalanze, welche von einer Umhüllung umgeben ist, mit welcher die Plasmalanze dem Werkstück gemeinsam zuführbar ist.

Zur Vermeidung von Fehlbeschichtungen ist es bekannt, beim Herausfahren der Beschichtungslanze aus einer Bohrung des Werkstückes den Metall-Plasmastrahl abzuschalten und erst wieder einzuschalten, wenn die Beschichtungslanze in eine weitere zu beschichtende Bohrung eingefahren ist. Sowohl beim Abschalten als auch beim Einschalten des Metall-Plasmastrahles kann der sich abbauende beziehungsweise aufbauende Metall-Plasmastrahl zu einem verstärkten Overspray führen. Zudem können Abschalt- und Anschaltvorgänge Schichtdickenabweichungen am Werkstück zur Folge haben. Diese Schichtdickenabweichungen beeinträchtigen die Qualität und können zu einem Ausschuss des gesamten Werkstückes führen.

Der Erfindung liegt die **Aufgabe** zugrunde, eine Vorrichtung und ein Verfahren zur metallischen Beschichtung eines Werkstückes sowie eine Aufnahmeeinheit für die Vorrichtung anzugeben, mit welchen Effizienz und Qualität bei der Herstellung einer Metallbeschichtung verbessert werden können.

Die Aufgabe wird nach der Erfindung mit einer Vorrichtung mit den Merkmalen des Anspruchs 1, einer Aufnahmeeinheit mit den Merkmalen des Anspruchs 9 und einem Verfahren mit den Merkmalen des Anspruchs 12 gelöst. Bevorzugte Ausführungen der Erfindung sind in den jeweils abhängigen Ansprüchen angegeben.

Die erfindungsgemäße Vorrichtung ist dadurch gekennzeichnet, dass eine Absaugglocke vorgesehen ist, welche zumindest einen axialen Abschnitt der Beschichtungslanze ringförmig umgibt, und dass die Absaugglocke eine ringförmige Aufnahmeeinheit aufweist, welche zum Anlagern von Metallpartikeln ausgebildet ist.

Ein Grundgedanke der Erfindung kann darin gesehen werden, dass die Beschichtungslanze entlang einem axialen Abschnitt von einer Absaugglocke ringförmig umgeben ist. Die Absaugglocke kann dabei Umgebungsluft mit einem Overspray von Metallpartikeln durch eine gezielte Luftströmung aufnehmen. Dabei ist der Begriff Absaugglocke nicht allein so zu verstehen, dass durch einen entsprechenden Unterdruck die belastete Umgebungsluft von der Beschichtungslanze in die Absaugglocke eingesogen und über eine Abluftleitung abgeführt wird. Vielmehr kann durch die Absaugglocke auch eine Luft- oder Schutzgasströmung erzeugt werden, durch welche belastete Umgebungsluft zu einer Ausführleitung im Bereich der Absaugglocke geleitet wird.

Insgesamt kann so eine zuverlässige Abführung überschüssiger Metallpartikel erreicht werden, so dass die Gefahr von unerwünschten Fehlbeschichtungen am Werkstück oder an Fertigungseinrichtungen vermieden oder zumindest erheblich reduziert wird.

Ein weiterer Aspekt der Erfindung besteht darin, dass eine ringförmige Aufnahmeeinheit vorgesehen ist, welche zum Anlagern von Metallpartikeln ausgebildet ist. Hierdurch können Metallpartikel des Plasmastrahles, welche nicht an dem Werkstück an den vorgesehenen Stellen anhaften, in der Aufnahmeeinheit gezielt aufgenommen und dort angelagert werden. Diese Aufnahmeeinheit kann dabei ein Verschleißteil sein, welches regelmäßig gewechselt wird, wenn eine übermäßige Anlagerung von Metallpartikeln gegeben ist.

Grundsätzlich kann die ringförmige Aufnahmeeinheit am unteren Ende der Absaugglocke angeordnet sein. Besonders vorteilhaft ist es nach einer Ausführungsform der Erfindung, dass die Aufnahmeeinheit auswechselbar innerhalb der Absaugglocke gelagert ist. Dabei ist die trommelförmige Aufnahmeeinheit vorzugsweise so in einem unteren Bereich der Absaugglocke angeordnet, dass bei einem Herausfahren der Beschichtungslanze aus dem Werkstück dieses bei weiterlaufendem Metall-Plasmastrahl unmittelbar in die trommelförmige Aufnahmeeinheit eingefahren wird, wobei der Plasmastrahl auf eine Umfangswand der Aufnahmeeinheit gerichtet ist. Der Metall-Plasmastrahl muss also nicht abgeschaltet werden, so dass die mit dem An- und Abschalten verbundenen Probleme vermieden sind. Die Metallpartikel werden unmittelbar durch die trommelförmige Aufnahmeeinheit aufgenommen, welche einen Durchmesser von vorzugsweise zwischen 10 cm und 50 cm aufweisen kann. Kleinere oder größere Durchmesser sind jedoch abhängig von der Art der Beschichtungslanze möglich und ausdrücklich nicht ausgeschlossen. Der sich bei der Beschichtung der Aufnahmeeinheit ergebende Overspray wird zudem zuverlässig durch die Absaugglocke abgeführt. Sobald sich eine übermäßige Beschichtung an der Aufnahmeeinheit gebildet hat, etwa nach mehreren Stunden, einem Tag oder mehreren Tagen, kann die Aufnahmeeinheit ausgebaut und durch eine neue Aufnahmeeinheit ausgewechselt werden.

Dabei ergibt sich nach einer Weiterbildung der Erfindung eine besonders effiziente Auswechselbarkeit dadurch, dass die Absaugglocke eine Abdeckhaube und eine Grundplatte aufweist, welche an einer Unterseite der Abdeckhaube angebracht ist, und dass die ringförmige Aufnahmeeinheit an der Grundplatte lösbar angeordnet ist.

Insbesondere ist es dabei vorteilhaft, dass die Grundplatte mittels mindestens einer Schnellspanneinrichtung an der Abdeckhaube lösbar befestigt ist. Somit kann die Grundplatte bei Erreichen einer Grenzschichtdicke der angelagerten Metallpartikel durch Abnehmen der Grundplatte und Lösen der Aufnahmeeinheit von der Grundplatte schnell entfernt und durch eine neue Aufnahmeeinheit als Verschleißelement ausgetauscht werden. Durch die Halterung an Grundplatte kann die Aufnahmeeinheit relativ dünnwandig und damit material- und kostensparend ausgebildet werden.

Das Auswechseln kann manuell oder durch eine automatische Auswechseleinheit erfolgen. Das Auswechseln kann zu vorgegebenen Zeitpunkten oder bei Erreichen einer vorgegebenen Grenzbeschichtungsdicke durchgeführt werden. Diese kann gegebenenfalls über eine entsprechende Sensoreinrichtung, etwa einen optischen Sensor oder einen Gewichtssensor oder rechnerisch basierend auf Betriebsdaten ermittelt werden, so dass ein bedarfsgerechtes Auswechseln der Aufnahmeeinheit erfolgen kann.

Gemäß einer weiteren Ausführungsform der Erfindung ist es vorteilhaft, dass die Grundplatte eine Mittenöffnung aufweist, an welcher ein Ringflansch vorgesehen ist, welcher eine radial nach innen abfallende Konusfläche aufweist. Insgesamt wird so eine relativ schmale, schräg gerichtete Fläche gebildet, welche einen Übergang durch die Grundplatte zur Aufnahmeeinheit darstellt. Die radial nach innen abfallende Konusfläche ist so gestaltet, dass auftreffende Metallpartikel nicht oder kaum an dieser Konusfläche ablagern, sondern zur Aufnahmeeinheit abgelenkt werden.

Eine vorteilhafte Weiterbildung besteht nach der Erfindung darin, dass die Konusfläche mit einer Antihafteigenschaft ausgebildet ist. Die Antihafteigenschaft kann durch eine geeignete Beschichtung oder eine geeignete Materialwahl des Ringflansches erreicht werden. Insbesondere Buntmetalllegierungen können bewirken, dass Metallpartikel aus dem Plasmastrahl nicht oder nur in einem verminderten Umfang an der Konusfläche anhaften. Die Antihafteigenschaft kann auch noch durch andere geeignete Materialkombinationen erreicht werden.

Eine weitere Möglichkeit zur Herstellung oder weiteren Verbesserung der Antihafteigenschaft besteht darin, die Konusfläche mit einer geringen Rauigkeit auszubilden. Dies kann etwa durch ein Polieren erfolgen.

Eine besonders zweckmäßige Ausführung der Erfindung ergibt sich dadurch, dass an einer Oberseite der Abdeckhaube eine abnehmbare Deckplatte angeordnet ist. Durch eine Öffnung der Abdeckhaube an der Oberseite kann eine gezielte Beeinflussung der Strömungsrichtung beim Absaugen erfolgen. Bei einer im Wesentlichen geschlossenen Oberseite mit der Deckplatte wird maßgeblich Umgebungsluft von der Unterseite, also aus dem Werkstück oder aus der Richtung des Werkstückes, angesaugt. Hierbei kann erreicht werden, dass sich Metallpartikel aus der Umgebungsluft im Bereich des Werkstückes abgeführt werden. Durch Abnehmen der Deckplatte und eine Öffnung an der Oberseite wird Umgebungsluft von oben eingesogen, was bei bestimmten Werkstücken erwünscht sein kann. Erfindungsgemäß sind die Absaugglocke und die Beschichtungslanze an einem verfahrbaren Grundschlitten angeordnet und die Absaugglocke und/oder die Beschichtungslanze sind an dem Grundschlitten zumindest in eine Richtung verfahrbar gelagert. Der Grundschlitten kann Teil einer Beschichtungsvorrichtung sein, wobei mit dem Grundschlitten die Beschichtungslanze in die beispielsweise zu beschichtenden Bohrungen des Werkstückes verfahrbar ist. An einem Rahmen des Grundschlittens kann die Absaugglocke und/oder die Beschichtungslanze verfahrbar gelagert sein. Insbesondere sind die Absaugglocke und die Beschichtungslanze linear in einer Achsrichtung verfahrbar, welche parallel zur Längsachse der Beschichtungslanze verläuft. Zudem ist die Beschichtungslanze vorzugsweise drehbar um die Längsachse gelagert, um etwa eine rotationssymmetrische Bohrung zu beschichten.

Die eingangs gestellte Aufgabe wird hinsichtlich der Aufnahmeeinheit dadurch gelöst, dass ein trommelförmiger Grundkörper mit einer Umfangswand und mindestens einem ringförmigen Randelement vorgesehen ist, welches an einem Ende der Umfangswand angebracht ist und sich radial nach innen erstreckt.

Die Aufnahmeeinheit ist an einer Vorrichtung zur metallischen Beschichtung eines Werkstückes mit einer Beschichtungslanze angebracht, wie sie zuvor beschrieben worden ist. Die trommelförmige Aufnahmeeinheit kann dabei auch an einer Beschichtungsvorrichtung ohne eine Absaugglocke zum Einsatz kommen. Die trommelförmige Aufnahmeeinheit dient dazu, bei einem durchlaufenden Betrieb des Metall-Plasmastrahles der Beschichtungslanze diesen aufzunehmen, wenn die Beschichtungslanze aus dem Werkstück herausgefahren ist. Die überflüssig versprühten Metallpartikel werden so gezielt von der Aufnahmeeinheit aufgefangen. Das eine oder vorzugsweise die beiden ringförmigen Randelemente dienen unterstützend dazu, möglichst die gesamten Metallpartikel in der Aufnahmeeinheit aufzunehmen. Bei Erreichen einer Grenzbefüllung der Aufnahmeeinheit kann diese durch eine frische Aufnahmeeinheit ersetzt werden.

Grundsätzlich kann die Aufnahmeeinheit aus jedem geeigneten Material hergestellt sein. Besonders vorteilhaft ist es, nach einer Weiterbildung der Erfindung, dass der Grundkörper aus Blech gefertigt ist. An dem metallischen dünnwandigen Blechkörper haften die aufgeschmolzenen Metallpartikel besonders gut an. Zudem weist der Blechkörper mit einer Wandstärke zwischen 0,5 bis 5 mm eine hinreichende Festigkeit auf, so dass Metallpartikel mit einer Masse von mehreren Kilo angelagert werden können. Zudem kann eine Aufnahmeeinheit aus Metall kostengünstig wiederverwertet werden.

Grundsätzlich kann die Aufnahmeeinheit als ein einstückiges Element durch Tiefziehen, Drückumformung, Gießen oder Schmieden hergestellt sein. Grundsätzlich kann der Grundkörper zusammengeschweißt sein, etwa aus ringförmigen Elementen. Eine vorteilhafte Ausführungsvariante der Erfindung besteht darin, dass der Grundkörper aus Teilsegmenten aufgebaut ist. So kann der Grundkörper aus zwei Halbschalen aufgebaut sein, welche auf einer Grundplatte der Absaugglocke zu der trommelförmigen Aufnahmeeinheit zusammengesetzt werden. Es können auch mehrere Teilsegmente vorgesehen sein, so dass sich insgesamt eine leichtere Handhabung der einzelnen Teilsegmente ergibt.

Hinsichtlich des Verfahrens wird die eingangs genannte Aufgabe dadurch gelöst, dass zumindest ein axialer Abschnitt der Beschichtungslanze von einer Absaugglocke ringförmig umgeben wird, durch welchen eine Luftströmung erzeugt wird, mittels welcher mit Metallpartikeln belastete Umgebungsluft abgeführt wird.

Mit dem Verfahren kann insbesondere ein Overspray während der Beschichtung sowie während der Transportphase der Beschichtungslanze zuverlässig unmittelbar an der Beschichtungslanze entfernt werden. Durch eine entsprechende Luftströmung wird Umgebungsluft mit den darin noch befindlichen Metallpartikeln angesaugt und insbesondere zu einer Filtereinrichtung abgeführt. Das Verfahren kann insbesondere mit der zuvor beschriebenen Vorrichtung zur metallischen Beschichtung durchgeführt werden.

Eine vorteilhafte Ausführungsvariante des erfindungsgemäßen Verfahrens besteht darin, dass die Luftströmung mittels einer Strömungseinrichtung erzeugt wird, welche über einen Lüftungskanal an der Absaugglocke angeschlossen ist. Über diesen Lüftungskanal kann die mit Metallpartikeln belastete Umgebungsluft aus dem Werkstück und dem Bereich um die Beschichtungslanze zuverlässig abgeführt werden.

Gemäß einer weiteren Ausführungsvariante des erfindungsgemäßen Verfahrens ist es vorteilhaft, dass die Beschichtungslanze aus dem Werkstück in die Absaugglocke mit einer Aufnahmeeinheit verfahren wird, wobei der Metall-Plasmastrahl auf die Aufnahmeeinheit gerichtet wird und sich Metallpartikel an einer Umfangswand der Aufnahmeeinheit anlagern. Die Aufnahmeeinheit stellt dabei ein Verschleißteil dar, welches gezielt überschüssige Metallpartikel aufnimmt und bei entsprechender Füllung ausgetauscht werden kann.

Gemäß einer weiteren Ausführungsvariante der Erfindung ist es dabei zweckmäßig, dass die Aufnahmeeinheit in vorgegebenen Zeitabständen und/oder bei Erreichen einer vorgegebenen Anlagerungsmenge ausgetauscht wird. Die Anlagerungsmenge kann insbesondere mittels Sensoren, etwa einem optischen Sensor zur Schichtdickenmessung oder einem Kraftmesssensor zum Messen des Gewichtes der Aufnahmeeinheit, oder rechnerisch basierend auf Betriebsdaten ermittelt werden.

Die Erfindung wird nachfolgend anhand von bevorzugten Ausführungsbeispielen weiter beschrieben, welche schematisch in den beigefügten Zeichnungen dargestellt sind. In den Zeichnungen zeigen:
- Fig. 1: eine schematische perspektivische Ansicht einer erfindungsgemäßen Vorrichtung zur metallischen Beschichtung;
- Fig. 2: eine schematische perspektivische Ansicht der Vorrichtung von Fig. 1, jedoch ohne Beschichtungslanze;
- Fig.3: eine vergrößerte Querschnittsansicht zu der Absaugglocke gemäß der Vorrichtung von Figuren 1 und 2; und
- Fig. 4: eine vergrößerte perspektivische Ansicht einer Aufnahmeeinheit gemäß der Erfindung.

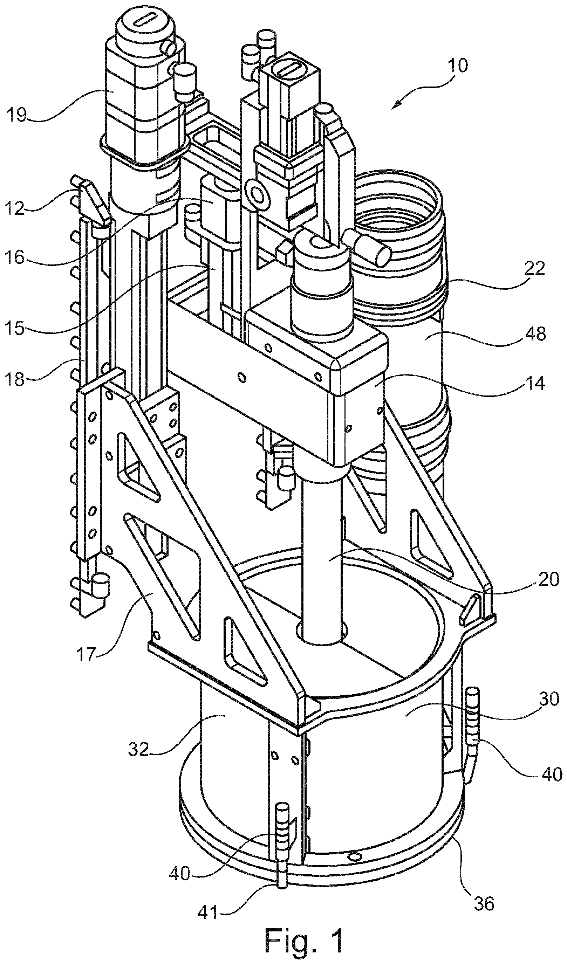

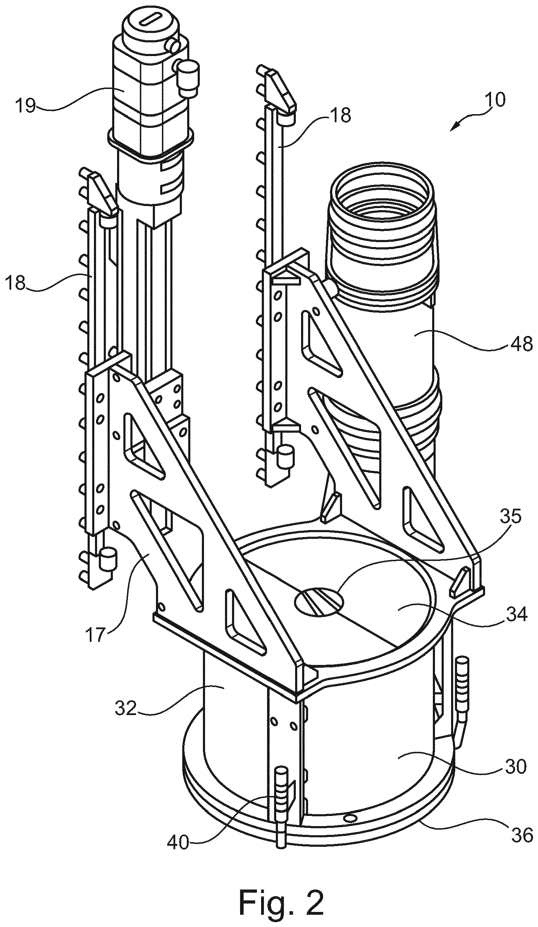

Eine erfindungsgemäße Vorrichtung 10 zur metallischen Beschichtung eines nicht dargestellten Werkstückes ist in wesentlichen Teilen in den Figuren 1 und 2 dargestellt. Das Werkstück kann insbesondere ein Motorblock sein, dessen Zylinderbohrungen mit einer Metallbeschichtung versehen werden. Zum Bilden der Metallbeschichtung wird eine stangenförmige Beschichtungslanze 20 verwendet, welche grundsätzlich bekannt ist und einen Metall-Plasmastrahl erzeugt. Durch diesen im Wesentlichen radial gerichteten Metall-Plasmastrahl werden Metallpartikel mit hoher Geschwindigkeit auf die zu beschichtende Werkstückwand aufgebracht, wobei eine feste, dünnwandige Metallbeschichtung gebildet wird. Der Aufbau und die Betriebsweise einer derartigen Beschichtungslanze sind hinlänglich bekannt. Die Vorrichtung 10 kann zudem einen nicht dargestellten Grundrahmen sowie Zuführ- und Positioniereinrichtungen für das Werkstück aufweisen.

Die schaftförmige Beschichtungslanze 20 mit der zugehörigen Grundeinheit 22 ist auf einem Lanzenschlitten 14 gehaltert, welcher in einer vertikalen Richtung entlang einer Lanzenführung 15 mittels eines Lanzen-Linearantriebes 16 gegenüber einem Grundschlitten 12 verfahrbar ist, welcher nur schematisch angedeutet ist. Weiterhin ist die Beschichtungslanze 20 um ihre vertikale Längsachse drehbar gelagert und antreibbar, um mit einem radial gerichteten Metall-Plasmastrahl eine Innenwand einer Zylinderbohrung zu beschichten.

Auf dem Grundschlitten 12 ist weiterhin eine Absaugglocke 30 mittels eines Glockenschlittens 17 in vertikaler Richtung und parallel zur Verfahrrichtung des Lanzenschlittens 14 verfahrbar gelagert. An dem Grundschlitten 12 sind hierzu zwei schienenartige Glockenführungen 18 angeordnet, mit welchen der Glockenschlitten 17 über Gleitschuhe in führender Verbindung steht. Eine Linearverschiebung wird mittels eines Linearantriebes 19 bewirkt. Der Grundschlitten 12 selbst ist gegenüber dem Grundrahmen der Vorrichtung 10 in mehreren Richtungen verfahrbar gelagert. An dem rahmenartigen Glockenschlitten 17 der Absaugglocke 30 ist eine zylindrische oder trommelförmige Abdeckhaube 32 befestigt.

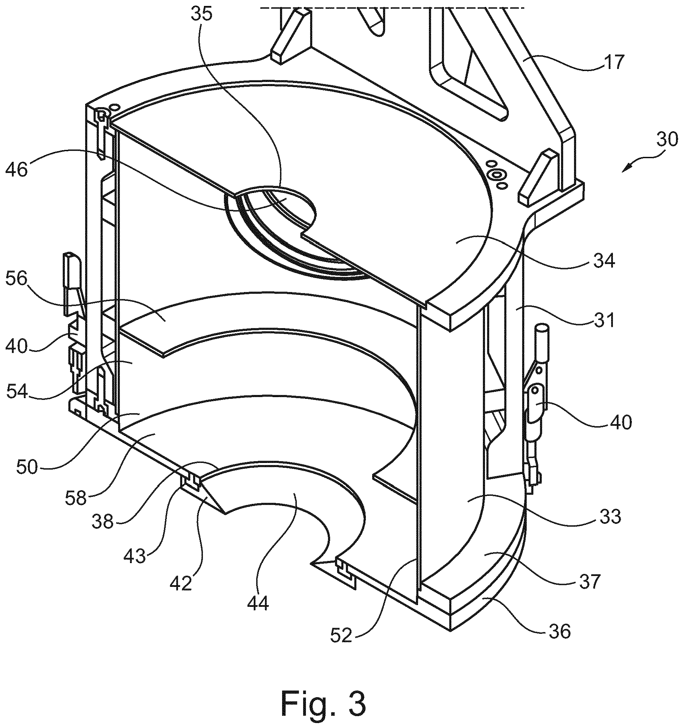

Mit Bezugnahme auch auf die Fig. 3 wird der Aufbau der Absaugglocke 30 näher erläutert. Die Abdeckhaube 32 ist aus Blech gefertigt und ist in einem Halterahmen 31 angebracht, welcher an dem Glockenschlitten 17 befestigt ist. Die Abdeckhaube 32 weist eine zylindrische Wand 33 auf, welche an ihrer Oberseite durch eine Deckplatte 34 abgeschlossen ist. Die Deckplatte 34 ist zweiteilig ausgeführt und weist eine mittige Durchtrittsöffnung 35 zum Durchtritt der Beschichtungslanze 20 auf. In der zylindrischen Wand 33 ist eine Abführöffnung 46 eingebracht, über welche aus dem Innenraum der Abdeckhaube 32 im Betrieb Umgebungsluft, welche mit Metallpartikeln belastet ist, über einen Lüftungskanal 48 mittels einer nicht dargestellten Strömungseinrichtung, insbesondere einer Pumpe, abgesaugt und zu einer Filtereinrichtung abgeführt werden kann. Die Deckplatte 34 ist lösbar angebracht und kann zur Beeinflussung der Strömungsverhältnisse abgenommen werden.

An ihrer Unterseite wird die Abdeckhaube 32 von einer ringförmigen Grundplatte 36 abgeschlossen, welche über im vorliegenden Ausführungsbeispiel drei Schnellspanneinrichtungen 40 lösbar an einer unteren Ringstrebe 37 des Halterahmens 31 befestigt ist. Hierzu sind an der radialen Außenkante der Grundplatte 36 radial vorstehende Hakenelemente 41 vorgesehen, welche mit einem Spannbügel der Schnellspanneinrichtung 40 in Verbindung kommen.

Zum Durchtritt der Beschichtungslanze 20 durch die Grundplatte 36 weist diese eine Mittenöffnung 38 auf, entlang welcher ein Ringflansch 42 über Federelemente 43 federnd gelagert und an der Grundplatte 36 gehaltert ist. Die federnde Lagerung des Ringflansches 42 dient einem passgenauen, flexiblen Aufsetzen der Absaugglocke 30 auf einem Werkstück.

Der Ringflansch 42 weist an seiner radialen Innenseite eine Konusfläche 44 mit einem nach oben gerichteten Schrägungswinkel von ca. 30° auf. Beim Durchtritt der Beschichtungslanze 20 aus dem Werkstück in die Absaugglocke 30 bei einem kontinuierlich durchlaufenden Metall-Plasmastrahl werden auf die Konusfläche 44 auftreffende Metallpartikel in großem Umfang abgelenkt und in eine trommelförmige Aufnahmeeinheit 50 geleitet, welche auf der Grundplatte 36 in der Absaugglocke 30 gelagert ist. Zur Vermeidung unerwünschter Anhaftungen an der Konusfläche 44 ist diese durch eine entsprechende Materialwahl und Oberflächenbearbeitung mit einer Antihafteigenschaft versehen.

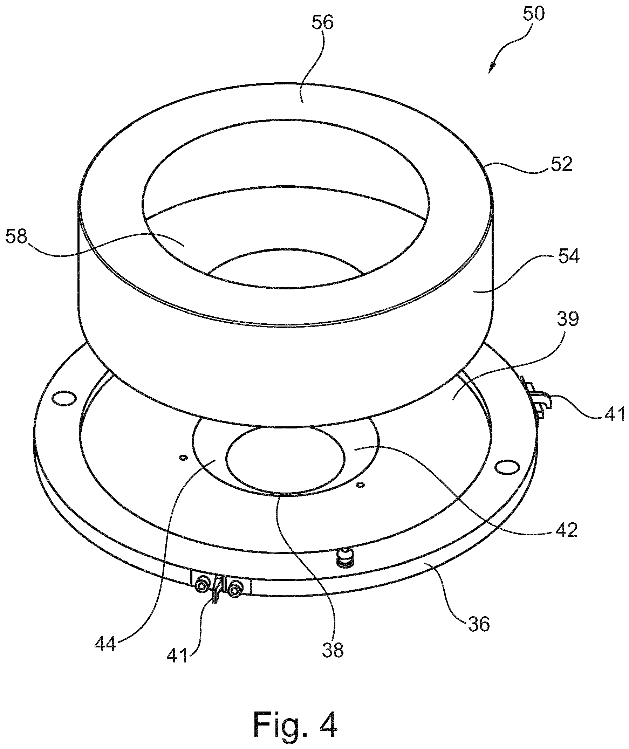

Der Aufbau einer erfindungsgemäßen Aufnahmeeinheit 50 für die erfindungsgemäße Vorrichtung 10 wird näher in Fig. 4 dargestellt. Die trommelförmige Aufnahmeeinheit 50 weist einen Grundkörper 52 aus Blech auf, welcher eine aus einem gebogenen und verschweißten Blechstreifen gefertigte zylindrische Umfangswand 54 umfasst. Am oberen Ende der Umfangswand 54 ist ein ringförmiges oberes Randelement 56 angeschweißt. In entsprechender Weise ist am unteren Ende der Umfangswand 54 ein ringförmiges unteres Randelement 58 angeschweißt. Beide Randelemente 56, 58 sind radial nach innen gerichtet und umschließen einen ringförmigen Auffangraum.

Das untere Randelement 58 weist eine größere radiale Erstreckung als das obere Randelement 56 auf und ist an eine ringförmige Ausnehmung 39 in der Grundplatte 36 angepasst. Das untere Randelement 58 erstreckt sich dabei bis zur Mittenöffnung 38 in der Grundplatte 36, an welcher die Konusfläche 44 des Ringflansches 42 beginnt. Hierdurch wird erreicht, dass beim Einfahren der Beschichtungslanze 20 mit durchlaufendem Metall-Plasmastrahl die Metallpartikel in der Absaugglocke 30 weitgehend auf eine Innenseite der Umfangswand 54 der Aufnahmeeinheit 50 gelangen. In einer eingefahrenen Endposition der Beschichtungslanze 20 in der Absaugglocke 30 ist der Metall-Plasmastrahl etwa mittig auf eine Innenseite der Umfangswand 54 gerichtet. Das obere Randelement 56 und das untere Randelement 58 stellen sicher, dass Metallpartikel nicht nach oben beziehungsweise nach unten aus der Aufnahmeeinheit 50 austreten.

Im Laufe des Betriebs wird die Beschichtungslanze 20 in die Absaugglocke 30 bei fortlaufendem Metall-Plasmastrahl immer dann eingefahren, wenn die Beschichtungslanze 20 relativ von einer zu beschichtenden Werkstückbohrung zu der nächsten zu beschichtenden Werkstückbohrung verfahren wird. Während dieses Verfahrvorganges mit dem Grundschlitten 12 wird die Beschichtungslanze 20 weitergedreht, so dass der durchlaufende Metall-Plasmastrahl eine Metallanlagerung an der Innenseite der Umfangswand 54 der Aufnahmeeinheit 50 bildet. Sobald diese Metallanlagerung eine bestimmte Grenzmenge erreicht hat, welche einige Kilo betragen kann, wird die Aufnahmeeinheit 50 durch eine neue Aufnahmeeinheit 50 ausgewechselt. Hierzu werden die Schnellspanneinrichtungen 40 gelöst, so dass die Grundplatte 36 mit der darauf aufliegenden Aufnahmeeinheit 50 von der darüber angeordneten Abdeckhaube 32 getrennt ist. In diesem Zustand kann die Aufnahmeeinheit 50 entnommen und durch eine neue Aufnahmeeinheit 50 ersetzt werden. Anschließend wird die Abdeckhaube 32 wieder auf die Grundplatte 36 aufgesetzt und beide Teile mittels der Schnellspanneinrichtungen 40 wieder verbunden. Anschließend kann mit der Beschichtung der Werkstücke fortgefahren werden. Weiter wird über die Absaugglocke 30 Umgebungsluft der Beschichtungslanze 20 abgesaugt. Die Absaugung erfolgt sowohl während der Beschichtung des Werkstückes als auch während die Beschichtungslanze 20 in die Absaugglocke 30 eingefahren ist. Hierdurch wird Overspray abgeführt, welcher insbesondere auch entsteht, wenn der Metall-Plasmastrahl auf die Aufnahmeeinheit 50 gerichtet ist.

## Patentansprüche

1. Vorrichtung zur metallischen Beschichtung eines Werkstückes mit einer verfahrbaren Beschichtungslanze (20), durch welche ein Metall-Plasmastrahl zum Bilden der Beschichtung aus Metallpartikeln erzeugbar ist,
wobei über eine Abluftleitung Umgebungsluft von der Beschichtungslanze (20) mit einem Overspray von Metallpartikeln abführbar ist,
**dadurch gekennzeichnet,**
**dass** zum Absaugen der Umgebungsluft eine Absaugglocke (30) vorgesehen ist, welche zumindest einen axialen Abschnitt der Beschichtungslanze (20) ringförmig umgibt,
**dass** die Absaugglocke (30) und die Beschichtungslanze (20) an einem verfahrbaren Grundschlitten (12) angeordnet sind,
**dass** die Beschichtungslanze (20) und/oder die Absaugglocke (30) an dem Grundschlitten (12) zumindest in einer Richtung verfahrbar gelagert ist und
**dass** die Absaugglocke (30) an dem verfahrbaren Grundschlitten (12) eine ringförmige Aufnahmeeinheit (50) aufweist, welche zum Anlagern von Metallpartikeln ausgebildet ist,dass die Aufnahmeeinheit (30) einen trommelförmigen Grundkörper (52) mit einer Umfangswand aufweist,
**dass** an einem unteren Ende der Umfangswand ein ringförmiges Randelement angebracht ist, das sich radial nach innen erstreckt, und
**dass** die Aufnahmeeinheit auswechselbar an der Absaugglocke befestigt ist.

2. Vorrichtung nach Anspruch 1,
**dadurch gekennzeichnet,**
**dass** die Absaugglocke (50) eine Abdeckhaube (32) und eine Grundplatte (36) aufweist, welche an einer Unterseite der Abdeckhaube (32) angebracht ist, und dass die ringförmige Aufnahmeeinheit (50) auf der Grundplatte (36) lösbar angeordnet ist.

3. Vorrichtung nach Anspruch 2,
**dadurch gekennzeichnet,**
**dass** die Grundplatte (36) mittels mindestens einer Schnellspanneinrichtung (40) an der Abdeckhaube (32) lösbar befestigt ist.

4. Vorrichtung nach Anspruch 3 oder 4,
**dadurch gekennzeichnet,**
**dass** die Grundplatte (36) eine Mittenöffnung (38) aufweist, an welcher ein Ringflansch (42) vorgesehen ist, welcher eine radial nach innen abfallende Konusfläche (44) aufweist.

5. Vorrichtung nach Anspruch 4,
**dadurch gekennzeichnet,**
**dass** die Konusfläche (44) mit einer Antihafteigenschaft ausgebildet ist.

6. Vorrichtung nach einem der Ansprüche 2 bis 5,
**dadurch gekennzeichnet,**
**dass** an einer Oberseite der Abdeckhaube (32) eine abnehmbare Deckplatte (34) angeordnet ist.

7. Aufnahmeeinheit für eine Vorrichtung (10) zur metallischen Beschichtung eines Werkstückes nach einem der Ansprüche 1 bis 6,
**dadurch gekennzeichnet,**
**dass** ein trommelförmiger Grundkörper (52) mit einer Umfangswand (54) und mindestens einem ringförmigen Randelement (56, 58) vorgesehen ist, welches an einem Ende der Umfangswand (54) angebracht ist und sich radial nach innen erstreckt.

8. Aufnahmeeinheit nach Anspruch 7,
**dadurch gekennzeichnet,**
**dass** der Grundkörper (52) aus Blech gefertigt ist.

9. Aufnahmeeinheit nach Anspruch 7 oder 8,
**dadurch gekennzeichnet,**
**dass** der Grundkörper (52) aus Teilsegmenten aufgebaut ist.

10. Verfahren zur metallischen Beschichtung eines Werkstückes, wobei mittels einer Beschichtungslanze (20) ein Metall-Plasmastrahl erzeugt wird, durch welchen auf dem Werkstück die Beschichtung aus Metallpartikeln gebildet wird,
**dadurch gekennzeichnet,**
**dass** eine Vorrichtung (10) nach einem der Ansprüche 1 bis 6 verwendet wird, bei welcher eine Absaugglocke (30) und die Beschichtungslanze (20) an einem verfahrbaren Grundschlitten (12) angeordnet sind und die Absaugglocke (30) an dem verfahrbaren Grundschlitten (12) eine ringförmige Aufnahmeeinheit (50) aufweist, wobei zumindest ein axialer Abschnitt der Beschichtungslanze (20) von der Absaugglocke (30) ringförmig umgeben wird, durch welche eine Luftströmung erzeugt wird, mittels welcher mit Metallpartikeln belastete Umgebungsluft abgeführt wird,
**dass** die Beschichtungslanze (20) bei weiterlaufendem Metall-Plasmastrahl in die ringförmige Aufnahmeeinheit (50) eingefahren wird und
**dass** sich Metallpartikel an der Aufnahmeeinheit (50) in der Absaugglocke (30) an dem verfahrbaren Grundschlitten (12) anlagern.

11. Verfahren nach Anspruch 10,
**dadurch gekennzeichnet,**
**dass** die Luftströmung mittels einer Strömungseinrichtung erzeugt wird, welche über einen Lüftungskanal (48) an der Absaugglocke (30) angeschlossen ist.

12. Verfahren nach Anspruch 10 oder 11,
**dadurch gekennzeichnet,**
**dass** die Beschichtungslanze (20) aus dem Werkstück in die Absaugglocke (30) mit einer Aufnahmeeinheit (50) verfahren wird, wobei der Metall-Plasmastahl auf die Aufnahmeeinheit (50) gerichtet wird und sich Metallpartikel an einer Umfangswand der Aufnahmeeinheit (50) anlagern.

13. Verfahren nach Anspruch 12.
dadurch **gekennzeichet**,
dass die Aufnahmeeinheit (50) in vorgegebenen Zeitabständen und/oder bei Erreichen einer vorgegebenen Anlagerungsmenge ausgetauscht wird.

## Claims

1. Device for metallic coating of a workpiece having a mobile coating lance (20), through which a metal plasma jet can be generated to form the coating of metal particles,
wherein from the coating lance (20) ambient air with an overspray of metal particles can be removed via a waste air pipe,
**characterised in that**
an extraction hood (30), which annularly encloses at least an axial portion of the coating lance (20), is provided to draw off the ambient air,
**in that** the extraction hood (30) and the coating lance (20) are arranged on a mobile base carriage (12),
**in that** the coating lance (20) and / or the extraction hood (30) is mounted so that it can be moved on the base carriage (12) at least in one direction, and
**in that** the extraction hood (30) has, on the mobile base carriage (12), an annular holding unit (50) which is designed for depositing metal particles,
**in that** the extraction hood (30) has a drum-shaped base body (52) with a peripheral wall,
**in that** at a lower end of the peripheral wall is fixed an annular edge element which extends radially inwards, and
**in that** the holding unit is mounted within the extraction hood so that it can be replaced.

2. Device according to claim 1,
**characterised in that**
the extraction hood (50) has a cover hood (32) and a bottom plate (36), which is arranged on a lower side of the cover hood (32), and
**in that** the annular holding unit (50) is arranged releasably on the bottom plate (36).

3. Device according to claim 2,
**characterised in that**
the bottom plate (36) is releasably fastened to the cover hood (32) by means of at least one quick release device (40).

4. Device according to claim 3 or 4,
**characterised in that**
the bottom plate (36) has a central opening (38), on which an annular flange (42) is provided, which has a radially inwardly falling conical surface (44).

5. Device according to claim 4,
**characterised in that**
the conical surface (44) is formed with an anti-adhesion property.

6. Device according to one of the claims 2 to 5,
**characterised in that**
a removable cover plate (34) is arranged at an upper side of the cover hood (32).

7. Holding unit for a device (10) for metallic coating of a workpiece according to one of claims 1 to 6,
**characterised in that**
a drum-shaped base body (52) is provided with a peripheral wall (54) and at least one annular edge element (56, 58), which is arranged at an end of the peripheral wall (54) and extends radially inwards.

8. Holding unit according to claim 7,
**characterised in that**
the base body (52) is produced from sheet metal.

9. Holding unit according to claim 7 or 8,
**characterised in that**
the base body (52) is constructed from sub-segments.

10. Method for metallic coating of a workpiece, wherein a metal plasma jet is generated by means of a coating lance (20), through which the coating of metal particles is formed on the workpiece,
**characterised in that**
a device (10) according to one of claims 1 to 6 is used, wherein an extraction hood (30) and the coating lance (20) are arranged on a mobile base carriage (12), and the extraction hood (30) has, on the mobile base carriage (12), an annular holding unit (50), wherein at least one axial portion of the coating lance (20) is enclosed annularly by the extraction hood (30), through which an air flow is generated, by means of which ambient air containing metal particles is removed,
**in that** the coating lance (20) is moved, with continuing metal plasma jet, into the annular holding unit (50) and
**in that** metal particles are deposited on the holding unit (50) in the extraction hood (30) on the mobile base carriage (12).

11. Method according to claim 10,
**characterised in that**
the air flow is generated by means of a flow device which is connected via a ventilation duct (48) to the extraction hood (30).

12. Method according to claim 10 or 11,
**characterised in that**
the coating lance (20) is moved out of the workpiece into the extraction hood (30) having a holding unit (50), wherein the metal plasma jet is directed onto the holding unit (50) and metal particles depose on a peripheral wall of the holding unit (50).

13. Method according to claim 12,
**characterised in that**
the holding unit (50) is exchanged at predefined time intervals and / or when a predefined amount of deposits is reached.

## Revendications

1. Dispositif servant à doter une pièce d'un revêtement métallique comprenant une lance de revêtement (20) pouvant être déplacée, par laquelle un jet de plasma métallique peut être produit afin de former le revêtement composé de particules de métal,
dans lequel de l'air ambiant provenant de la lance de revêtement (20) peut être évacué avec un excès de pulvérisation de particules de métal par l'intermédiaire d'un conduit d'évacuation d'air,
**caractérisé en ce**
**qu'**est prévue, aux fins de l'évacuation par aspiration de l'air ambiant, une cloche d'évacuation par aspiration (30), qui entoure de manière à présenter une forme annulaire au moins une portion axiale de la lance de revêtement (20),
**que** la cloche d'évacuation par aspiration (30) et la lance de revêtement (20) sont disposées au niveau d'un chariot de base (12) pouvant être déplacé,
**que** la lance de revêtement (20) et/ou la cloche d'évacuation par aspiration (30) sont montées au niveau du chariot de base (12) de manière à pouvoir être déplacées au moins dans une direction, et
**que** la cloche d'évacuation par aspiration (30) présente, au niveau du chariot de base (12) pouvant être déplacé, une unité de logement (50) de forme annulaire, qui est réalisée aux fins du dépôt de particules de métal, que l'unité de logement (30) présente un corps de base (52) en forme de tambour pourvu d'une paroi périphérique,
**qu'**un élément de bord de forme annulaire est installé au niveau d'une extrémité inférieure de la paroi périphérique, lequel élément de bord s'étend radialement vers l'intérieur, et
**que** l'unité de logement est fixée de manière interchangeable au niveau de la cloche d'évacuation par aspiration.

2. Dispositif selon la revendication 1,
**caractérisé en ce**
**que** la cloche d'évacuation par aspiration (50) présente un capot de recouvrement (32) et une plaque de base (36), qui est installée au niveau d'un côté inférieur du capot de recouvrement (32), et
**que** l'unité de logement (50) de forme annulaire est disposée de manière amovible sur la plaque de base (36).

3. Dispositif selon la revendication 2,
**caractérisé en ce**
**que** la plaque de base (36) est fixée de manière amovible au niveau du capot de recouvrement (32) au moyen d'au moins un système de serrage rapide (40).

4. Dispositif selon la revendication 3 ou 4,
**caractérisé en ce**
**que** la plaque de base (36) présente une ouverture centrale (38), au niveau de laquelle une bride annulaire (42) est prévue, laquelle présente une surface conique (44) tombant radialement vers l'intérieur.

5. Dispositif selon la revendication 4,
**caractérisé en ce**
**que** la surface conique (44) est réalisée avec une propriété antiadhésive.

6. Dispositif selon l'une quelconque des revendications 2 à 5,
**caractérisé en ce**
**qu'**une plaque couvrante (34) pouvant être retirée est disposée au niveau d'un côté supérieur du capot de recouvrement (32).

7. Unité de logement pour un dispositif (10) servant à doter une pièce d'un revêtement métallique selon l'une quelconque des revendications 1 à 6,
**caractérisée en ce**
**qu'**un corps de base (52) en forme de tambour est prévu avec une paroi périphérique (54) et au moins un élément de bord (56, 58) de forme annulaire, lequel élément de bord est installé au niveau d'une extrémité de la paroi périphérique (54) et s'étend radialement vers l'intérieur.

8. Unité de logement selon la revendication 7,
**caractérisée en ce**
**que** le corps de base (52) est fabriqué à partir d'une tôle.

9. Unité de logement selon la revendication 7 ou 8,
**caractérisée en ce**
**que** le corps de base (52) est créé à partir de segments partiels.

10. Procédé servant à doter une pièce d'un revêtement métallique, dans lequel un jet de plasma métallique est produit au moyen d'une lance de revêtement (20), par lequel le revêtement à partir de particules de métal est formé sur la pièce,
**caractérisé en ce**
**qu'**un dispositif (10) selon l'une quelconque des revendications 1 à 6 est utilisé, dans lequel une cloche d'évacuation par aspiration (30) et la lance de revêtement (20) sont disposées au niveau d'un chariot de base (12) pouvant être déplacé, et la cloche d'évacuation par aspiration (30) présente, au niveau du chariot de base (12) pouvant être déplacé, une unité de logement (50) de forme annulaire, dans lequel au moins une portion axiale de la lance de revêtement (20) est entourée de manière à présenter une forme annulaire par la cloche d'évacuation par aspiration (30), par laquelle un flux d'air est produit, au moyen duquel l'air ambiant chargé en particules de métal est évacué,
**que** la lance de revêtement (20) est rentrée dans l'unité de logement (50) de forme annulaire dans le cas d'un jet de plasma métallique se poursuivant, et
**que** les particules de métal se déposent au niveau de l'unité de logement (50) dans la cloche d'évacuation par aspiration (30) au niveau du chariot de base (12) pouvant être déplacé.

11. Procédé selon la revendication 10,
**caractérisé en ce**
**que** le flux d'air est produit au moyen d'un dispositif d'écoulement, qui est raccordé à la cloche d'évacuation par aspiration (30) par l'intermédiaire d'un canal d'aération (48).

12. Procédé selon la revendication 10 ou 11,
**caractérisé en ce**
**que** la lance de revêtement (20) est déplacée avec une unité de logement (50) hors de la pièce dans la cloche d'évacuation par aspiration (30), dans lequel le jet de plasma métallique est dirigé sur l'unité de logement (50) et les particules de métal se déposent au niveau d'une paroi périphérique de l'unité de logement (50).

13. Procédé selon la revendication 12,
**caractérisé en ce**
**que** l'unité de logement (50) est remplacée à des intervalles de temps prédéfinis et/ou une fois une quantité de dépôt spécifiée atteinte.
